Europäisches Patentamt

European Patent Office

Office européen des brevets

(19)

(11) Publication number: **0 265 738 B1**

(12) **EUROPEAN PATENT SPECIFICATION**

(45) Date of publication of patent specification: **09.10.91**

(51) Int. Cl.5: **G05D 1/00, B64C 13/46, B60K 26/02**

(21) Application number: **87114727.8**

(22) Date of filing: **21.01.83**

(60) Publication number of the earlier application in accordance with Art.76 EPC: **0 085 518**

(54) Control apparatus.

(30) Priority: **22.01.82 GB 8201907**
**22.10.82 GB 8230312**

(43) Date of publication of application:
**04.05.88 Bulletin 88/18**

(45) Publication of the grant of the patent:
**09.10.91 Bulletin 91/41**

(84) Designated Contracting States:
**DE FR IT NL SE**

(56) References cited:
**GB-A- 2 073 887**
**US-A- 2 772 841**

(73) Proprietor: **BRITISH AEROSPACE PUBLIC LIMITED COMPANY**
**11 Strand**
**London WC2N 5JT(GB)**

(72) Inventor: **Hill, Graham Arthur**
**British Aerospace Public Limited Company**
**Warton Aerodrome Preston Lancs PR4 1AX(GB)**
Inventor: **Acklam, Donald John**
**British Aerospace Public Limited Company**
**Warton Aerodrome Preston Lancs PR4 1AX(GB)**
Inventor: **Carr, Brian**
**British Aerospace Public Limited Company**
**Warton Aerodrome Preston Lancs PR4 1AX(GB)**
Inventor: **Latham, Phillip Anthony**
**British Aerospace Public Limited Company**
**Warton Aerodrome Preston Lancs PR4 1AX(GB)**

Inventor: **Bird, David**
**British Aerospace Public Limited Company**
**Warton Aerodrome Preston Lancs PR4**
**1AX(GB)**
Inventor: **Kaye, Arthur**
**British Aerospace Public Limited Company**
**Warton Aerodrome Preston Lancs PR4**
**1AX(GB)**

(74) Representative: **Eastmond, John et al**
**British Aerospace plc Corporate IPR Depart-**
**ment, Headquarters P.O. Box 87 Building**
**Q191 Royal Aerospace Establishment**
**Farnborough Hants GU14 6YU(GB)**

## Description

This invention relates to certain developments and improvements in control devices of the kind disclosed in our UK Patent Application No. 2,073,887A, which control devices enable an operator to control associated apparatus to which, in use, the control device is connected. By way of example, the control device may be a thrust demand unit ('throttle box') for controlling an engine of an aircraft. Amongst others, UK Patent No. Application 2,073,887A discloses embodiments of control devices wherein the movement of a manually movable control member effects a control action on the associated apparatus, via suitable output means such as a position encoder and electrical signal link or a mechanical coupling, and wherein an electrical stepper motor is connected to the control member and is so energised by a computer controlled motor drive that a noticeable increase in the resistance to manual movement of the control member is generated by the motor when the control member is at one or more pre-set detent positions in its overall range of movement. In addition or as an alternative, the computer may control the motor drive system so as to generate a controlled feel force resisting the manual movement of the control member throughout its range of movement. As well as the above, the control device may be operable for being set into an automatic control mode in which the computer drives the stepper motor to produce motor driven movement of the control member.

This invention consists of a control device for controlling associated equipment, the control device comprising a fixed support, a manually movable control member, output means for transmitting a control action to said associated equipment dependent upon the position of the control member, an electrical stepper motor connected between the control member and the fixed support, and a computer for energising said motor to generate a controlled feel force resisting the manual movement of the control member and/or a noticeable increase in resistance to movement of the control member through one or more discrete detent positions in its overall range of movement, characterised in that the control member is an elongate lever pivotably connected to the support and said motor is a linear stepper motor with a fixed elongate stator connected to the support and a mover supported by the stator for linear movement therealong and pivotably connected to the control lever at a position on the control lever spaced from that of its pivotable connection to the support.

For a better understanding of the invention, reference will now be made by way of example to the accompnying drawings, in which:-

Figure 1 is a sectional plan view of a control device in accordance with the invention;

Figure 2 is a sectional, elevational view of the control device of Figure 1;

Figure 3 is a block diagram of a system for generating detents and/or force feel in association with the movement of a control member;

Figure 4 is a simplified diagram of part of an aircraft throttle box; and

Figure 5 and 6 are simplified circuit diagrams of an interface/control unit for use in conjunction with the control device of Figures 1 and 2.

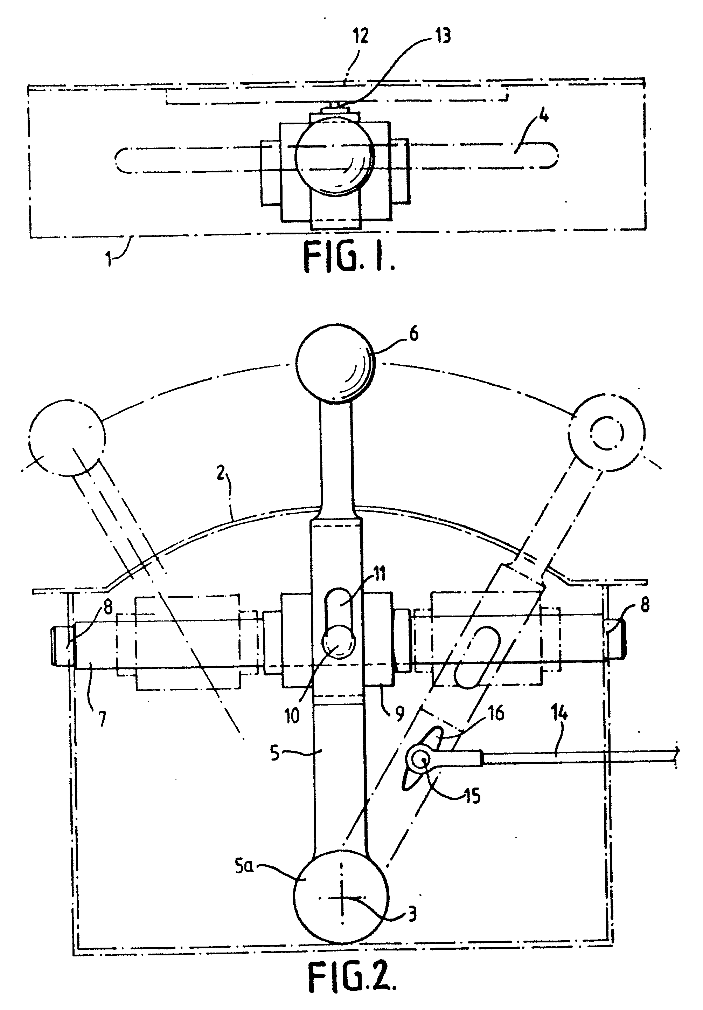

Figures 1 and 2 of the accompanying drawings show in diagrammatic form a control device which could form the basis of say an aircraft throttle-box. The device comprises a box 1 which, in plan, is rectangular and of which the top 2 is curved with respect to axis 3 and has a longitudinally extending slot 4 in it. Mounted to a shaft 5a for pivoting movement about axis 3 is a lever 5 which extends out through slot 4 and is there fitted with a grip handle or knob 6. Thus, the lever can be moved through the range of which the extremes are shown by the chain-lined representations of the lever.

Mounted within box 1 next to lever 5 is the stator rod 7 of a linear stepper motor of the kind disclosed and illustrated in our patent application No 2,073,887A. The rod is fixed by having its ends 8, which are stepped, entered into respective holes in the ends of the box. The moving element or 'mover' 9 of the stepper motor has a projecting peg 10 which extends into a slot 11 in the lever 5. Thus, as the lever 5 is manually moved, the mover 9 moves with it along rod 7 and, if the mover 9 is driven along rod 7, it moves the lever 5. As in application No. 2,073,887A, during manual movement of lever 5, the stepper motor may be operable to provide a fixed, variable or programmed degree of 'feel' to the manual movement.

In order to transmit the control action to whatever apparatus is being controlled, eg the aircraft engine controller if the device shown is a throttle-box, an electronic or mechanical linkage or both can be provided. The device shown has both. The electronic linkage comprises any suitable kind of linear position encoder fixed in box 1 and including a fixed element 12 and a moveable element 13 coupled to motor mover 9. By way of example, the encoder could by an Inductosyn (Registered Trade Mark) type of encoder, a linear potentiometer, or light-operated type of encoder. The mechanical back-up linkage includes a push-pull rod 14 pivotably coupled to lever 5, the pivot pin 15 extending through a slotted hole 16 in lever 5.

As an alternative to what is shown, the position encoder could be a rotary position encoder coupled to the lever 5, directly or via say a gear arrangement, at the pivot point 3. The mechanical linkage could also comprise any form of rotary coupling, say a gear drive belt and pulley, or a reel which winds up a Bowden cable coupled to lever 5 via its supporting shaft 5a.

The device shown, with suitable modification possibly, could be used for various control applications. For example, it could be adapted for foot-operation and then be operable for controlling the accelerator of a road vehicle.

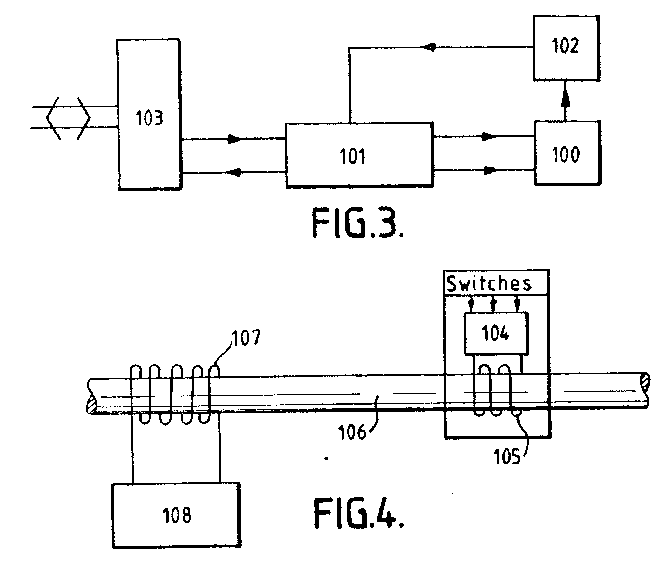

The electric stepper motor which generates the desired movement resistance and detents and which may also be operable to drive the movement of a movable member, may be incorporated in an overall system such as that shown in figure 3 where reference 100 indicates a feel unit and an energisation controller 101 is operable to supply driving/control signals for this unit on the basis of information received by the controller both from a position sensing device 102 coupled to the feel unit and from a suitable input/output interface unit 103 which interfaces the overall system to external influences. Thus, the position at which the moving member of the feel unit 100 in relation to the stationary member feels a detent force, and the magnitude of that force, may be controlled by the motor controller 101. The detent force may operate for a defined proportion of the available travel of the moving member at the same or varying force level. Signals from external sources are sent to the electronic interface unit 103 and operated upon according to requirement, to produce signals for the motor control unit 101 which will define the magnitude, position and characteristic form of the detent. For example in the case of an aircraft throttle box, the position of say a "MAX DRY" detent ie a throttle position at which there is attained maximum thrust without say any after burning system or other thrust supplement system in operation, can be varied as a function of altitude.

The controller 101 can be made operable to cause the base level "friction" force that resists the motion of the moving member to be increased when the throttle handle is in an idle position and signals are received at the interface circuit indicating that the aircraft undercarriage is down and aircraft weight is actually on the ground. By such a means it can be ensured that if, on landing, the aircraft is subject to sudden deceleration, the throttle handles are not thrown forward. It will be realised that the detent position(s) and feel force can be changed continuously as a function of vehicle speed, altitude or any other desired parameters or combination of parameters.

The handle or grip portion of an aircraft throttle-box may incorporate control switches, for example a switch for operating a reverse-thrust mechanism of the aircraft. In this case, and any other where switches and/or indicators are incorporated in or connected to the movable control member of the control device, the need for wiring coupled to the movable member may be removed by use of a wireless data transmission system between the mover and fixed data processing circuitry incorporated in the unit, for example mounted on the "stator" of the unit. Thus, as shown in figure 4, the switch information could be encoded by circuit 104 onto an AC signal which is fed into a coil 105 mounted in the moving member and wound around magnetic bar 106 along which the moving member travels. Another coil 107 attached to the stationary member would also be wound around the magnetic bar in a fixed position and would receive the encoded alternating signal and pass it to the data processing circuitry 108 for analysis.

Data could be passed either from the moving member to the stationary member or from the stationary to the moving member in a multiplexed manner. Power for the circuitry in the moving member could be derived from the data transmission signal used to communicate from stationary to moving member and, with the use of very low power electronic circuitry could provide sufficient power during the communication between moving and stationary member. The power in the moving member would be replenished during the next transmission from stationary to moving member.

It may be desirable for the control device such as a microprocessor based computer system which is controlling the stepper motor to receive an indication that the mover of the motor has in fact executed a step or series of steps commanded by the control device. For this purpose, application No. 2,073,887A disclosed the idea of comparing the e.m.f appearing across each motor winding with a waveform corresponding to what would appear across the motor winding if the command step were executed (this waveform is different to that which appears if the step is not executed because of the influence of movement-induced e.m.f.)

As a further possibility, the execution or otherwise of a command step can be detected by coupling a strain-gauge to the motor stator or incorporating such a gauge in the mover so as to sense the small strains and extraneous movements which occur in the motor elements during its operation.

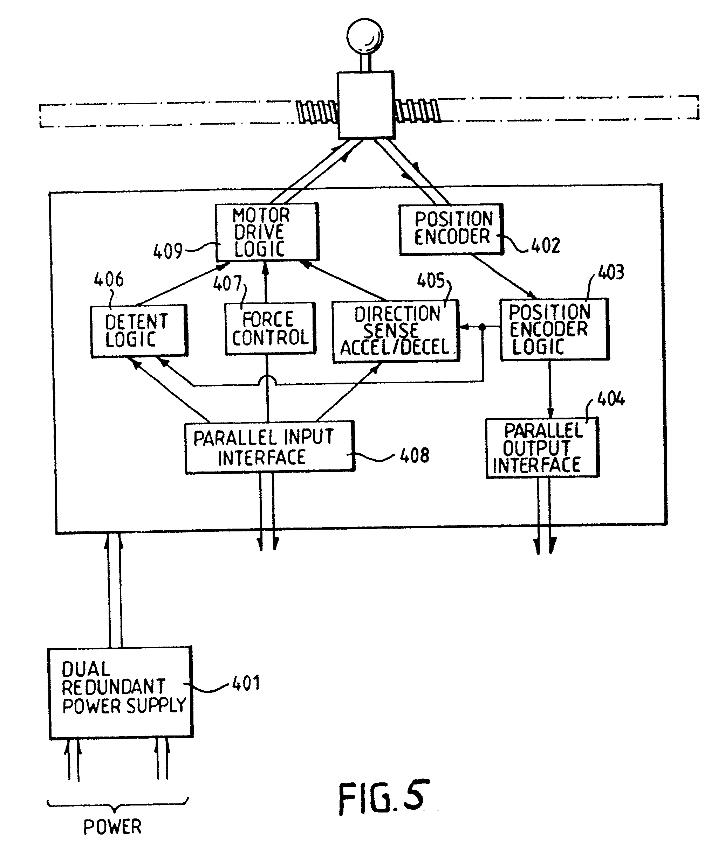

For a throttle box comprising a linear stepper motor the interface/control unit could be as shown in figure 5. This unit is energised by a dual redundant power supply 401 and interfaces the throttle box input and output data buses (preferably multiple channel buses to give a degree a redundancy as known in the art) which communicate with the aircraft autopilot and throttle control computers. The throttle box position encoder 402 is shown as a block and can be of any suitable form, and the position indicative signal therefrom is fed to an encoder logic unit 403 which in turn feeds an output data bus interface unit 404 and a direction sensing and acceleration/deceleration control unit 405. The unit 405 is interposed, along with a detent logic unit 406 and force control unit 407 between a parallel input interface 408 for the input data bus and a motor drive logic unit 409 which actually provides the energisation signals for the throttle box stepper motor. The unit 405 provides, in any automatic movement of the motor, acceleration and deceleration phases to ensure smoothness of that movement and also determines the direction in which the motor must move in order to get the grip portion of the throttle box from its instant position to a new position demanded by the aircraft computer via the input bus and interface 408. When in the manual mode, the unit 405 also senses the direction of any manual movement of the grip, ie by sensing the direction of change of the position encoder signal, and controls the drive logic 409 to ensure an appropriate energisation sequence of the motor windings either for generating the required resisting feel force or, possibly, if the pilot prefers it, an assisting force which reduces the manual force required to move the grip. The force control unit determines the general level of energisation of the motor windings in response to aircraft computer supplied signals indicative of the general feel force, detent force and/or movement forces required, while the detent logic unit senses when the grip is being manually moved through a detent position (which detent position has been communicated to it by the aircraft computer) and then initiates the production of the winding energisation level appropriate to generate the detent.

As will be appreciated, in figure 5 any desired level of redundancy may be incorporated.

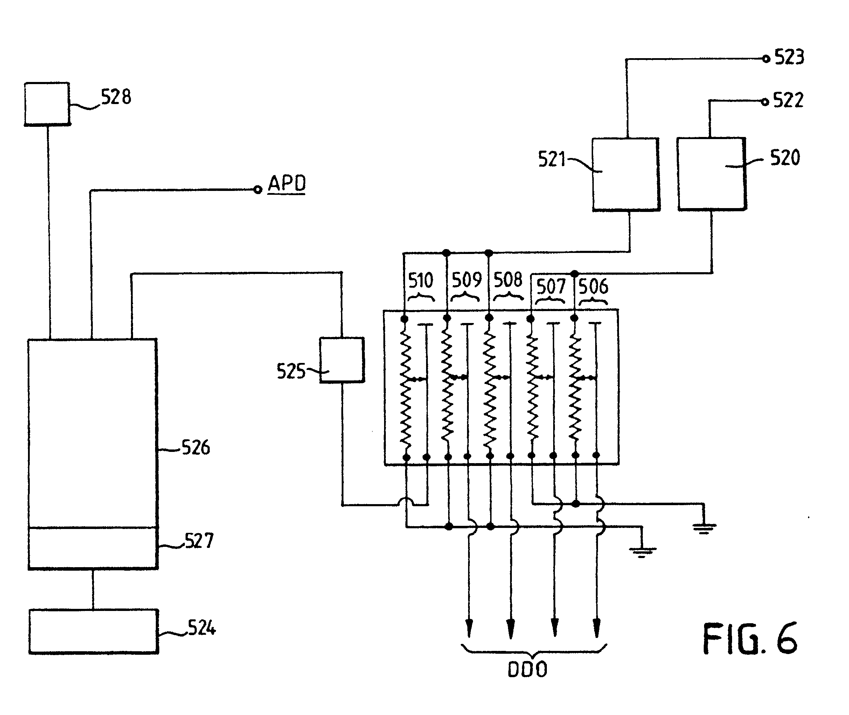

As shown diagrammatically in figure 6, a potentiometric position encoder for use in an aircraft throttle box comprising a linear stepper motor 524 could have five pontentiometers 506 to 510 each consisting of a resistive track and a conductive track bridged by a wiper. The wipers are ganged together to move with the moving element of the linear stepper motor. A reference voltage is applied between the ends of the resistive strip of each potentiometer so that there appears on the corresponding conductive strip an output voltage dependent on the position of the slider and hence on the position of the moving element of the motor.

The reference voltage for each potentiometer is obtained from a duplex supply arrangement comprising two independent reference generators 520 and 521 fed by independent power feeds 522 and 523 of the aircraft. The potentiometers 506 and 507 are fed from the generator 520 while the potentiometers 508 to 510 are fed from generator 521.

The output signals DDO from the potentiometers 506 to 509 are let off to an interface/control unit (not shown) which communicates with local engine controllers (not shown). Meanwhile, the output from potentiometer 510 is used as a feedback signal for controlling the motor 524. Accordingly, this signal is digitised by analogue to digital converter 525 and then fed to a control circuit 526 along with a signal APD from the aircraft autopilot (not shown) and representing a level of engine thrust demanded by the autopilot. Using these signals, the control circuit 526 is able to feed trains of drive pulses to the motor 524 via a power output stage 527 of circuit 526 so as to move the throttle lever according to the autopilot demand, each train of pulses preferably including an initial portion in which the pulse repetition rate is ramped up and an end portion where it is ramped down again so that the motor movement comprises a smooth combination of an acceleration phase, a constant-speed phase and a deceleration phase. At the same time, the circuit 526 may receive a signal from a pilot's control device 528 to set the standing energisation level of the motor windings and hence the resistance to manual movement of the throttle lever. Also, the circuit may maintain in store a record of the throttle lever position and, at certain positions, increase the winding energisation so as to provide, electrically, detents at these positions. The circuits may also respond to a predetermined value of signal APD, the value zero for example, indicating that the autopilot is switched off and to then set itself into a manual mode in which it does not output drive pulses to motor 524 but still maintains in store a record of the throttle lever position as the lever is manually moved by the pilot and controls the standing and detent energisation of the windings.

It is possible to use, in control apparatus as described, a linear stepper motor in which the electromagnetic drive windings are incorporated in the motor stator rather than the mover. Also, some form of wireless transmission could be used in order to extract control signals from switches mounted on the movable member or lever of the control apparatus. In each case, the object would be to avoid the need for cables to extend from the moveable member and/or the motor mover to a fixed point of the apparatus. On the other hand, as will be readily apparent, the use of such flexible cables because of its simplicity as compared to say wireless transmission may well be substantially advantageous. In this connection, it will be further noticed that embodiments of the invention described herein where the movable control member has an arcuate movement, as shown in figures 1 and 2 are advantageous as compared to 'linear' embodiments. The reason for this is that the conductors from the grip mounted control switches and/or from the motor mover can be led down along the movable member and then make the transition across to a fixed part of the apparatus at or near to the point where the movable member is pivotable mounted. At this point, the amount of movement which has to be taken up and hence also the length of the free or 'flying' portion of each conductor, is much less. Thus a winding supply cable (not shown) from the motor mover 9 can have a short 'free' portion entending between the mover 9 and the member 5, then a portion which is fixed to or extends inside the member 9, and then a further 'free' portion extending from the member 9, reasonably close to the pivot axis 3, over to an exit aperture in the base of housing 2. One or more further cables (not shown) could extend along the member 5 between the exit aperture and control switches (not shown) mounted on or near the grip portion 6.

## Claims

1. A control device for controlling associated equipment, the control device comprising a fixed support (1), a manually movable control member (5), output means (14) for transmitting a control action to said associated equipment dependent upon the position of the control member, an electrical stepper motor connected between the control member and the fixed support, and a computer for energising said motor to generate a controlled feel force resisting the manual movement of the control member and/or a noticeable increase in resistance to movement of the control member through one or more discrete detent positions in its overall range of movement, characterised in that the control member (5) is an elongate lever pivotably connected to the support (1) and said motor is a linear stepper motor with a fixed elongate stator (7) connected to the support and a mover (9) supported by the stator for linear movement therealong and pivotably connected to the control lever at a position on the control lever spaced from that of its pivotable connection to the support.

2. A control device according to claim 1, wherein said support (1) takes the form of a housing which encloses said stepper motor and part of said control lever, a further part of said control lever extending from said housing by way of an aperture (4) therein and this further part being provided with a portion (6) adapted for being conveniently engaged by a human operator.

3. A control device according to claim 2, wherein said portion of said control lever comprises a hand-grip portion and wherein there is mounted on said control lever, at least near said hand-grip portion, one or more control switches.

## Revendications

1. Dispositif de commande pour la commande d'un équipement associé, le dispositif de commande comprenant un support fixe (1), un élément de commande mobile manuellement (5), un moyen de sortie (14) pour transmettre une action de commande audit équipement associé en fonction de la position de l'élément de commande, un moteur électrique pas à pas monté entre l'élément de commande et le support fixe, et un ordinateur pour exciter ledit moteur afin de produire une force de palpage commandée qui résiste au déplacement manuel de l'élément de commande et/ou une augmentation perceptible de la résistance opposée au mouvement de l'élément de commande par l'intermédiaire d'une ou de plusieurs positions d'arrêt discrètes dans sa plage globale de mouvement, caractérisé en ce que l'élément de commande (5) est un levier allongé connecté en pivotement au support (1) et ledit moteur est un moteur pas à pas linéaire avec un stator allongé fixe (7) relié au support et à un élément mobile (9) supporté par le stator pour déplacement linéaire le long de celui-ci et connecté en pivotement au levier de commande à une position du levier de commande distante de celle de sa connexion pivotante avec le support.

2. Dispositif de commande selon la revendication 1, dans lequel ledit support (1) prend la forme d'un logement qui enferme ledit moteur pas à pas et une partie dudit levier de commande, une autre partie dudit levier de commande s'étendant à partir dudit logement au moyen d'une ouverture (4) ménagée dans celui-ci et cette autre partie comportant une portion (6) destinée à ce qu'un opérateur humain vienne commodément en contact avec elle.

3. Dispositif de commande selon la revendication 2, dans lequel ladite portion dudit levier de commande comprend une partie de préhension manuelle et dans lequel un ou plusieurs commutateurs de commande sont montés sur ledit levier de commande, au moins à proximité de ladite portion de préhension manuelle.

**Patentansprüche**

1. Steuervorrichtung zur Steuerung eines zugeordneten Gerätes, wobei die Steuervorrichtung folgende Teile umfaßt: einen festen Träger (1), ein manuell bewegliches Steuerglied (5), ein Abtriebsglied (14) zur Übertragung einer Steuerbewegung auf das zugeordnete Gerät in Abhängigkeit von der Lage des Steuergliedes, einen elektrischen Schrittmotor, der zwischen das Steuerglied und den festen Träger geschaltet ist und einen Computer zur Erregung des Motors zwecks Erzeugung einer gesteuerten Steuergefühlskraft, die der manuellen Bewegung des Steuergliedes entgegenwirkt und/oder ein merkliches Ansteigen des Widerstandes gegenüber der Bewegung des Steuergliedes über eine oder mehrere diskrete Raststellungen im gesamten Bewegungsbereich bewirkt,
dadurch gekennzeichnet, daß das Steuerglied (5) ein langgestreckter Hebel ist, der schwenkbar am Träger (1) angelenkt ist, daß der Motor ein linearer Schrittmotor mit einem langgestreckten Stator (7) ist, der mit dem Träger verbunden ist und daß ein Bewegungsglied (9) vom Stator getragen wird und linear längs des Stators beweglich ist und schwenkbar am Steuerhebel an einer Stelle angelenkt ist, die von der Anlenkstelle des Hebels am Träger distanziert ist.

2. Steuervorrichtung nach Anspruch 1, bei welcher der Träger (1) die Form eines Gehäuses hat, das den Schrittmotor und einen Teil des Steuerhebels umschließt, während ein weiterer Teil des Steuerhebels aus dem Gehäuse durch eine Öffnung (4) vorsteht und dieser weitere Teil mit einem Abschnitt (6) versehen ist, der bequem von einer menschlichen Bedienungsperson erfaßt werden kann.

3. Steuervorrichtung nach Anspruch 2, bei welcher jener Abschnitt des Steuerhebels einen Handgriff aufweist und am Steuerhebel wenigstens in der Nähe des Handgriffs ein oder mehrere Steuerschalter angeordnet sind.

FIG. 1.

FIG.2.

FIG.3.

FIG.4.

FIG.5

FIG. 6

EP 0 265 738 B1